# EUROPÄISCHE PATENTSCHRIFT

(11) **EP 1 203 542 B1**
(45) Veröffentlichungstag und Bekanntmachung des Hinweises auf die Patenterteilung: **23.04.2003**
(21) Anmeldenummer: 99117607.4
(22) Anmeldetag: 07.09.1999
(51) Int. Cl.: A44C 21/00

(54) **Scheibenförmiger Kunststoffkörper mit Einlegeteil**
Multilayer disc shaped plastic article with insert
Article en plastique, discoide, multicouche, incluant un insert

(43) Veröffentlichungstag der Anmeldung: 08.05.2002
(73) Patentinhaber: HTP High Tech Plastics AG, 7201 Neudörfl an der Leitha (AT)
(72) Erfinder: Schumi, Christian, 9500 Villach (AT); Pallanits, Josef, 7372 Drassmarkt (AT); Schermann, Harald, 7451 Oberloisdorf (AT)
(74) Vertreter: Riebling, Peter, Dr.-Ing.

(56) Entgegenhaltungen:
- EP-A- 0 884 163
- FR-A- 2 656 538
- FR-A- 2 760 331
- GB-A- 2 275 357
- US-A- 3 968 582
- US-A- 5 676 376

## Beschreibung

Die Erfindung betrifft einen scheibenförmigen Kunststoffkörper mit Einlegeteil nach dem Oberbegriff des Patentanspruchs 1. Anwendungsgebiete des vorliegenden Erfindungsgegenstands sind beispielsweise Casino-Jetons, Parkmünzen, Einkaufsmünzen, Wertjetons, Spielhallen-Jetons, Personalisierungs-Münzen, beispielsweise als Ausweiskarte.

Ein derartiger scheibenförmiger Kunststoffkörper ist beispielsweise mit dem Gegenstand der EP 444 373 A1 bekanntgeworden. Bei diesem bekannten Kunststoffkörper wird in eine zentrale, mittlere Ausnehmung eines ringförmigen Kunststoffkörpers das Einlegeteil eingesetzt, wobei das Einlegeteil in eine innere, umlaufende Ringnut des Kunststoffkörpers eingepresst und dort gehalten wird. Bei dieser Technik besteht der Nachteil, daß es sich um eine reine Haftverbindung (Formschlußverbindung) zwischen dem äußeren ringförmigen Teil und dem inneren Füllkörper (Einlegeteil) handelt, wobei diese Rastverbindung hohen Beanspruchungen nicht unbedingt standhält.
Ein weiterer Nachteil ist, daß am Kunststoffkörper zwar randseitige Markierungen in Form von Lappen vorhanden sind, die sich jedoch nur von einer Seite her nach oben erstrecken. Wenn es also darum geht, randseitige Markierungen an einem derartigen Kunststoffkörper anzubringen, sieht die EP 444 373 A1 vor, daß an dem ringförmigen äußeren Teil in axialer Richtung nach oben weisende Ansätze vorhanden sind, welche den Rand seitlich übergreifen. Damit sind jedoch hohe Herstellungskosten verbunden, weil insgesamt diese Ansätze an dem äußeren, umlaufenden Rand angeformt werden müssen, was mit hohen Werkzeugkosten verbunden ist.
Es entstehen im übrigen hohe Nachbearbeitungskosten, weil die Ansätze an dem ringförmigen Teil nicht so angeformt werden können, daß sie sofort passen, es sind entsprechende Schleifarbeiten notwendig, um die Ansätze z.B. deckflächenbündig auszubilden und diese in der Deckfläche zu integrieren.

Der Erfindung liegt deshalb die Aufgabe zugrunde einen Kunststoffkörper der eingangs genannten Art so weiterzubilden, daß sein Aussehen ansprechender ist, und er ferner wesentlich einfacher und kostengünstiger herzustellen sein soll.

Zur Lösung der gestellten Aufgabe ist die Erfindung durch die technische Lehre des Anspruches 1 gekennzeichnet.

Die Erfindung besteht im wesentlichen darin, daß ausgehend von einem Füllkörper, der das Einlegeteil in sich aufnimmt, dieser Füllkörper von zwei deckelartigen Folien eingefaßt ist, wobei die eine Folie in der Art eines Bechers den Füllkörper von der einen Seite umgibt und die andere, gegenüberliegende Folie in der Art eines Deckels auf die gegenüberliegende Seite des Füllkörpers aufgebracht ist.

Dabei weisen der Becher und/oder der Deckel vorzugsweise jeweils sternartig radial am Außenumfang angeordnete Ansätze auf, wobei im folgenden der Becher als Sternbecher und der Deckel als Sterndeckel bezeichnet wird.

Mit der gegebenen technischen Lehre ergibt sich somit der wesentliche Vorteil, daß die genannten Teile - Sternbecher und Sterndeckel - nun im Kunststoff-Spritzgußverfahren unmittelbar an den Füllkörper angeformt sind, wodurch die am Sternbecher angeformten, seitlichen Ansätze im Spritzgußverfahren um die außenliegenden Randlinien des Füllkörpers herum geführt werden können und randseitige Markierungen bilden.

Die randseitigen Markierungen werden demnach durch die radialen, nach außen gerichtete Ansätze der oberen und/oder der unteren Sternfolie ausgebildet und während des Spritzgußvorganges um die äußeren Ränder des Füllkörpers herumgezogen und mit diesem Füllkörper werkstoffeinstückig verspritzt.

Damit kommt es also zu einem absoluten sicheren Verbund zwischen den radial außenliegenden Ansätzen und den Rändern des Füllkörpers und es ist keine Nachbearbeitung eines so hergestellten Kunststoffkörpers notwendig.

Bei der EP 444 373 B1 mußte - wie erwähnt - eine Nachbearbeitung erfolgen, weil die radialen Ansätze, welche die randseitigen Markierungen bilden, eingefügt werden mußten und nicht angespritzt wurden. Es handelt sich also um eine reine Rastverbindung, die nicht verspritzt wurde, wodurch die Haltbarkeit und die Verschleißfestigkeit des Kunststoffkörpers litt.

Ein weiterer Vorteil der vorliegenden Erfindung liegt darin, daß im Gegensatz zur EP 444 373 der innere Füllkörper nicht mehr in einer Formschlußverbindung in einem umlaufenden, äußeren Körper aufgenommen wird, sondern lediglich von beiden Seiten her (Deckflächen) von der vorher erwähnten Sternbecher-Folie und der Sterndeckel-Folie umfaßt und eingeschlossen wird.

Diese Umfassung und Einschliessung erfolgt während des Spritzgußvorganges, d.h. also die genannten Folien werden im Spritzgußvorgang an den Füllkörper angespritzt, wodurch es zu einem Stoffschlußverbund kommt und die Materialien der Folie und des Füllkörpers ineinander verzahnt sind und ineinandergreifen, was beim Stand der Technik nicht bekannt war.

Es kommt dadurch zu einer absolut dichten, werkstoffeinstückigen und stoffeinstückigen Verbindung des Füllkörpers mit den oberen und unteren deckelseitigen Folienkörpern, was beim Stand der Technik bisher nicht bekannt war.

Weil erfindungsgemäß an mindestens einer der deckelseitigen Folie randseitige, radiale Ansätze angeordnet sind, die während des Spritzgiessens umgebogen und an den umlaufenden Rand des Füllkörpers angespritzt werden, ergibt sich ein außerordentlich hoch belastbarer Rand des dadurch hergestellten Kunststoffkörpers mit dem Vorteil, daß die randseitigen Markierungen, die durch die Ansätze gebildet werden, hoch verschleißfest, abriebfest und graphisch frei gestaltbar sind, wobei sie entweder in der Farbe der deckelseitigen Folien oder in einer beliebigen anderen Farbe ausgebildet werden können.

Bedingt durch die Tatsache, daß der Füllkörper sich über die gesamte Fläche des Kunststoffkörpers erstreckt (und sich nicht nur im Mittenbereich befindet), erreicht man ein wesentlich größeres Volumen und Gewicht des Füllkörpers. Dies ist eine der wesentlichen Forderungen an Spielhallen-Jetons, die ein gewisses Mindestgewicht aufweisen müssen. Mit dem Gegenstand der vorliegenden Erfindung lässt sich dieses Mindestgewicht sehr leicht erreichen, denn der Füllkörper erstreckt sich praktisch über den gesamten Außendurchmesser des Spielejetons und ist nicht nur auf einen mittleren Bereich beschränkt.

Weil man nun ein höheres Volumen für den Füllkörper zur Verfügung hat, braucht man auch keine teuren, den Füllkörper spezifisch schwer machenden Stoffe, wie z.B. Bariumsulfat, sondern man kann auf billigere und leichtere Füllkörpermaterialien ausweichen. Es ergibt sich nun die Möglichkeit, ein Kunststoffmaterial, welches mit Zink dotiert ist zu verwenden, ebenso wie andere schwere Füllmaterialien wie z.B. Ton, Glas, flüssige Füllstoffe, Kreide, pulverförmige Füllstoffe und dgl. mehr. Besonders wird hierbei eine Füllung mit Polyamid-Zink bevorzugt, wobei in eine flüssige Polyamid-Kunststoffschmelze Zink in pulverförmiger Form in einem Verhältnis von vorzugsweise 80 % zur Polyamidmasse (gravimetrisch gemessen) eingebracht wird. Andere Mischungsverhältnisse sind ebenfalls möglich.

Ein solcher Füllkörper kann nämlich ebenfalls im Kunststoff-Spritzgußverfahren hergestellt werden, hat eine sehr stabile Formgebung und ist deshalb geeignet, zwischen sich ein Einlegeteil aufzunehmen, ohne daß es notwendig ist, noch besondere weitere Maßnahmen für die Festigkeit des Füllkörpers zu verwenden.

Neben der Gestaltung des Materials des Füllkörpers aus einer Polyamidzink-Verbindung kann auch eine Polybutylen-Terephthalat-Zink Verbindung verwendet werden. Diese letztgenannte Verbindung PBTP in Verbindung mit dem vorher genannten Zinkpulver führt ebenfalls zu dem Ergebnis, daß der mittlere Füllkörper bestehend aus dem Oberteil und dem Unterteil als stabiles Kunststoffteil hergestellt werden kann, das in sich das Einlegeteil aufnimmt.

Der Füllkörper ist insbesondere zweiteilig ausgebildet, denn er besteht aus einem Füllkörper-Oberteil und aus einem dazugehörenden Füllkörper-Unterteil, wobei die beiden Teile miteinander formschlüssig verbunden und/oder verzahnt sind. Eine derartige formschlüssige Verzahnung kann beispielsweise erreicht werden durch ineinander greifende Nut-Zapfenverbindungen, durch Klebeverbindungen, durch reibschlüssige Verbindungen, wie z.B. "Bajonett", oder Druckknopfverbindungen oder Verbindungen durch Spritzgußtechnik mittels Kunststoffmasse.

Hierbei kommt es nicht auf die Art und die Ausbildung des Einlegeteils an. Das Einlegeteil kann zum Beispiel ein Transponder sein, der aus einer ein- oder mehrlagigen Spule besteht, in deren Innenraum ein Mikroprozessor angeordnet ist, der für den Sende- und Empfangsbetrieb sorgt. Das Einlegeteil kann auch ein einfaches Füllteil sein oder vollständig entfallen, wodurch ein passiver Chip gegeben ist.

Selbstverständlich sollte das Material des Füllkörpers nicht das Einlegeteil elektrisch abschirmen, soweit das Einlegeteil als Transponder ausgebildet ist, da der Sende- und Empfangsbetrieb darunter leiden würde.

Wenn hingegen auf einen derartigen Transponder verzichtet wird, kommt es auf die metallische Abschirmung nicht an.

Für die Ausbildung der deckelseitigen Dekorfolien und Dekorlaminate (Sternbecher und Sterndeckel) werden spritzgußfähige, graphisch gestaltbare (z.B. bedruckbare) Folien verwende, wobei man in der Foliendicke relativ frei ist. Man kann hierbei Foliendicken im Bereich von beispielsweise 100-300 µ verwenden.

Die Oberfläche der Folie sollte vorzugsweise seidenmatt sein und/oder einen Brillantglanz aufweisen.

Selbstverständlich können diese Folien in sämtlichen bekannten Druckverfahren bedruckt werden. Es können auch Sicherheitsdruckverfahren angewendet werden und noch zusätzliche Pigmente, Farbmischungen und dgl. verwendet werden können.

Die Erfindung ist jedoch auf den allgemeinen Aufbau des Kunststoffkörpers gerichtet, so daß es also auf die Gestaltung der Folien selbst nicht ankommt.

Es ergeben sich mit der vorliegenden Erfindung unter anderem folgende weitere Vorteile:
- Erreichbares Gewicht ohne weiteres +/- 10 Gramm, bei Materialwahl Polypropylen mit 50% Glas; Möglich wäre auch PA und POM mit Zugabe von Bariumsulfat im Bereich 70%.
- Sehr exakte Farben und Farbtreuheit möglich, bei sehr kräftigen Farbtönen
- Gute Abriebfestigkeit, in erster Linie der Kanten (Weißbruch) und der grafischen Gestaltung
- Sehr große Werbefläche der Folie
- Gute Chemikalienbeständigkeit
- Gute Lichtechtheit
- Gute Stapelbarkeit
- Gute Fälschungssicherheit bzw. -schwierigkeit
- Keine Notwendigkeit von metallischen Füllstoffen, daher Einsatz von Transpondern als Einlegeteil sehr gut möglich
- Angenehmer Klang, bei Einsatz als Spiele-Jeton
- Angenehme Haptik: die "Griffigkeit" und die Oberfläche bzw. das Greifgefühl ist hochwertig und sympathisch
- Variable Abmessungen: 36 und 40 mm in EU Standard, daneben noch mit 34, 38, 43, 45 mm Durchmesser

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unter-lagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Kunststoffkörper nach der Erfindung entlang der Linie I - in Figur 2;
- Figur 2:: Draufsicht auf den Kunststoffkörper nach Fig. 1;
- Figur 3:: Seitenansicht auf den Kunststoffkörper in Richtung des Pfeiles III in Fig. 2;
- Figur 4:: Draufsicht auf den Sterndeckel;
- Figur 5:: Draufsicht auf den Sternbecher;
- Figur 6:: Draufsicht auf das Füllkörper-Unterteil;
- Figur 7:: Seitenansicht von Füllkörper-Unterteil und Füllkörper-Oberteil mit dazwischenliegendem Einlegeteil;
- Figur 8:: Draufsicht auf das Einlegeteil;
- Figur 9:: Draufsicht auf das Füllkörper-Oberteil.

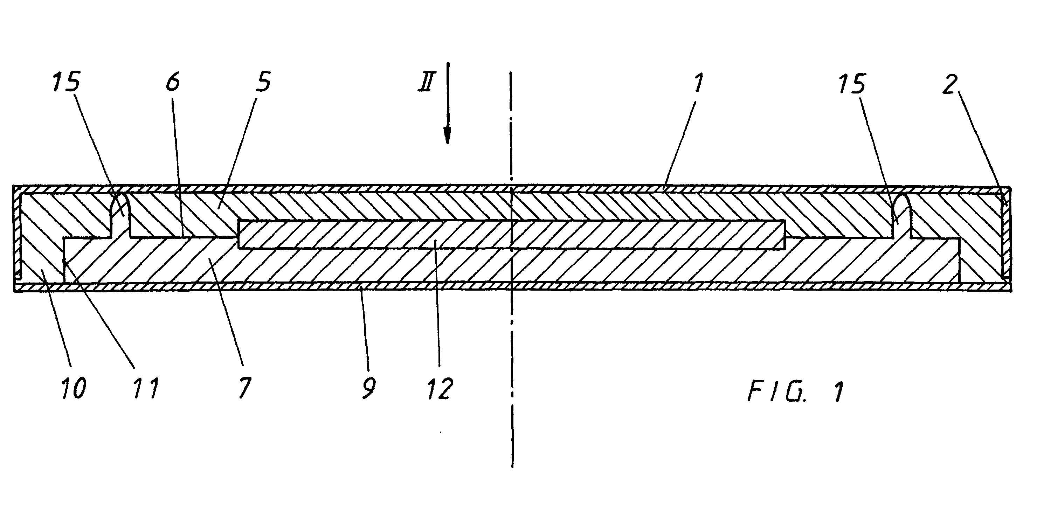

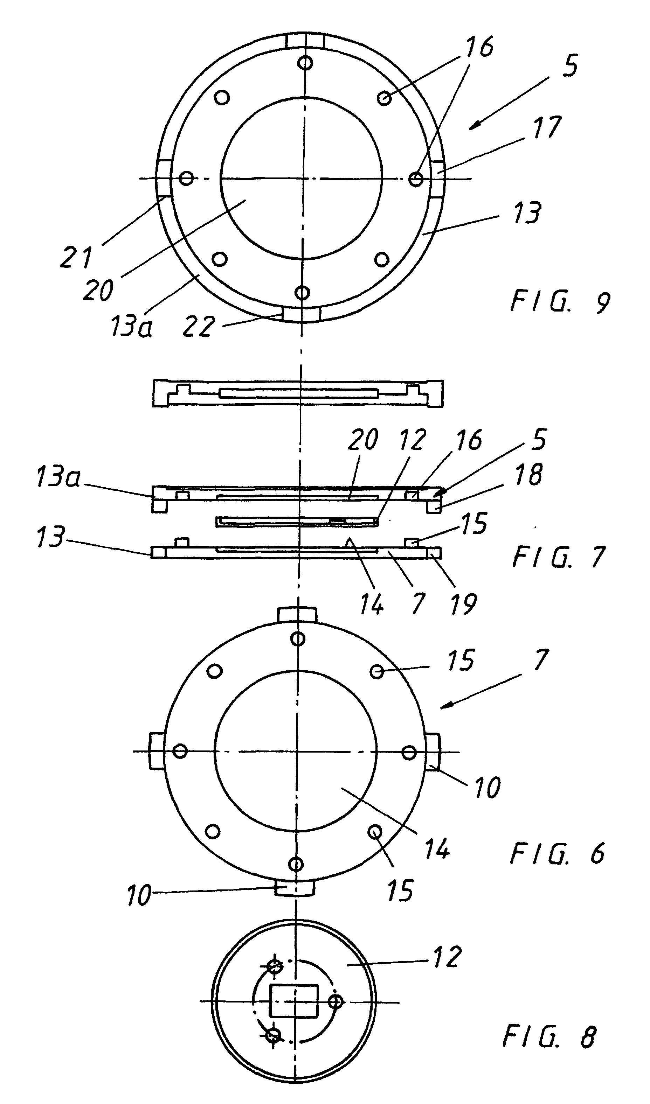

In Figur 1 ist der generelle Aufbau eines erfindungsgegenständlichen Kunststoffkörpers dargestellt, der im wesentlichen aus einem zweiteiligen Füllkörper mit Füllkörper-Unterteil 7 und Füllkörper-Oberteil 5 besteht. Es wird hierzu auf die Figuren 6 und 9 hingewiesen, wo die beiden Füllkörperteile 5,7 näher dargestellt sind.

Das Füllkörper-Unterteil 7 nach Figur 6 besteht im wesentlichen aus einem kreisringförmigen Körper, der eine mittlere Ausnehmung 14 definiert, die jedoch nicht den Körper durchbricht, sondern nur schalenförmig angelegt ist, sowie dies in Figur 7 im Schnitt dargestellt ist.

In diese Ausnehmung 14 wird ein Einlegeteil 12 eingelegt, welches gegenüberliegend von einer korrespondierenden Ausnehmung 20 in der Innenseite des Füllkörper-Oberteils 5 aufgenommen wird.

Die beiden Teile 5, 7 sind rastend miteinander verbindbar, wobei auf der Deckelfläche des Füllkörper-Unterteils 7 entsprechende axial nach oben gerichtete Noppen 15 vorzugsweise regelmäßig am Umfang verteilt angeordnet sind, die in zugeordnete Ausnehmungen 16 an der Innenseite des Füllkörper-Oberteils 5 eingreifen und mit diesen verrastbar sind.

Der Sinn der einander zugeordneten, formschlüssig ineinandergreifenden Teile, den Noppen 15 einerseits und den Ausnehmungen 16 andererseits, ist, daß eine eindeutige und gegebenenfalls lagerichtige Zuordnung von Ober- und Unterteil 5,7 im nachfolgenden Spritzgußprozess stattfindet, so daß sich diese Teile werkstoffeinstückig und stoffschlüssig miteinander verbinden und nicht mehr lösbar sind. Sie verschmelzen also miteinander und schließen zwischen sich das Einlegeteil 12 ein, welches beispielsweise einen Transponder beinhalten kann.

Zusätzlich bilden die beiden Füllkörperteile 5,7 jeweils umlaufende Ränder 13, 13a bzw. Randsegmente, wobei aus Figur 7 ersichtlich ist, daß das Randsegment 13a sich beispielsweise jeweils von Position 21 bis Position 22 erstreckt und zwischen zwei benachbarten Randsegmenten 13a, 13 entsprechende sich nach aussen öffnende Randausnehmungen 17 vorhanden sind, in welche später die noch zu beschreibenden radialen Ansätze 10, 2 der noch zu beschreibenden Deckfolien 1, 9 eingreifen.

Ferner erkennt man z.B. in Figur 7 am Füllkörper-Oberteil 5 einen axial nach unten gerichteten, randseitigen Ansatz 18, der in eine zugeordnete, randseitig ausgebildete und nach außen hin geöffnete Ausnehmung 19 des Füllkörper-Unterteils 7 eingreift, so daß die beiden Füllkörperteile 5, 7 formschlüssig ineinander greifen und sich ergänzen.

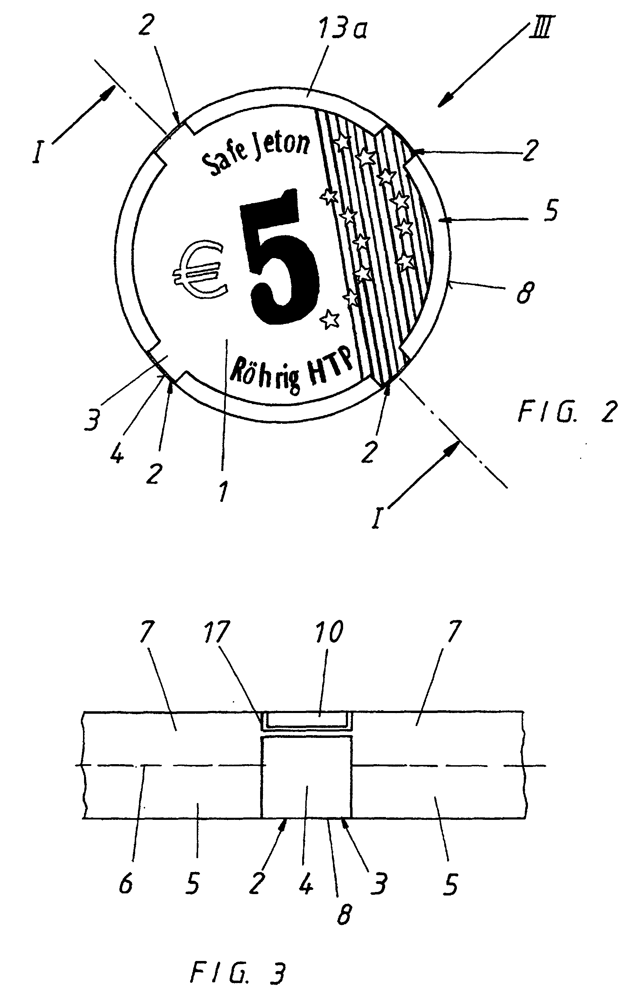

Dies ergibt sich im übrigen auch aus den Figuren 1 und 3 wo erkennbar ist, daß die beiden Teile 5, 7 eine virtuelle Trennlinie 6 aufweisen, die während des Kunststoffspritzvorganges verschmilzt, so daß sie nicht mehr sichtbar ist.

Erfindungsgemäß ist die obere Deckfolie, welche das Füllkörper-Oberteil 5 von oben her einschließt, als Stembecher 1 ausgebildet. Unter dem Begriff "Sternbecher" nach Figur 1 und Figur 5 wird eine Folie verstanden, an der im regelmäßigen Abstand am Umfang verteilt radial nach außen weisende Ansätze 2 vorhanden sind.

Diese Ansätze 2 können farbig unterschiedlich ausgebildet werden, d.h. sie können aus einem Abschnitt 3 und aus einem weiteren radial weiter außenliegenden Abschnitt 4 gebildet sein.

Hierbei ist wichtig, daß sich der Abschnitt 3 beispielsweise nur bis zur Außenkante 8 (siehe Figur 3) erstreckt und in einer bestimmten ersten Farbgebung gehalten ist, wie dies auch in Figur 2 dargestellt ist, während der hierzu rechtwinklig abgebogene Abschnitt 4 in einer anderen Farbgebung gehalten ist und im wesentlichen gem. Figur 3 die randseitige, rechteckförmige Markierung des gesamten Kunststoffkörpers bildet.

Die Breite dieses Ansatzes 2 ist beliebig wählbar. Es müssen auch nicht gleichmäßig am Umfang verteilt angeordnete Ansätze 2 angeordnet sein, sondern diese können auch ungleichmäßig angeordnet sein oder eine unterschiedliche Breite aufweisen.

Auf der gegenüberliegenden Seite ist die Sterndeckel-Folie 9 angeordnet, die ebenfalls radial auswärts gerichtete Ansätze 10 aufweist, die jedoch in ihrer radialen Erstreckung kürzer ausgebildet sind als die vorher erwähnten Ansätze 2.

Dies führt dazu, daß diese Ansätze 10 sich nur bis zur äußeren Umfassungskante 8 des Kunststoffkörpers erstrecken, sowie dies auch in Figur 3 ersichtlich ist, so daß man bei Ansicht auf die Kante des Füllkörpers nur noch die schmale Stirnseite dieser Ansätze 10 erkennt.

Wichtig ist, daß die genannten Ansätze sich in die Randausnehmungen 17 der Füllkörper 5, 7 erstrecken und bündig mit dem Rand abschließen, so daß sie nicht über die Außenumfassung der Füllkörper hinausragen. Dadurch wird ein einheitlicher, durchgehender Randverbund im Spritzgußverfahren gebildet, wobei die Ansätze von ihren Dimensionen und Abmessungen her nicht mehr von dem umlaufenden Rand unterscheidbar sind. Sie gehen also bündig und fugenlos in den umlaufenden Rand der Füllkörper 5, 7 über , und hieraus ergibt sich die große Verschleißfestigkeit des erfindungsgemässen Kunststoffkörpers, weil im Spritzgußverfahren diese Ansätze 2, 10 mit den Füllkörpern 5, 7 im Bereich der Randausnehmung 17 verspritzt sind und dort einen stoffschlüssigen Verbund ergeben.

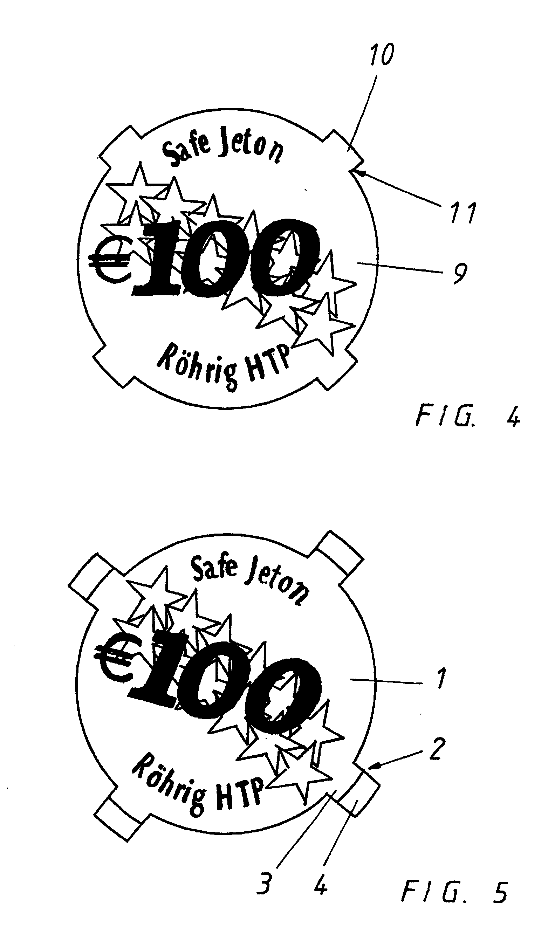

Selbstverständlich ist die vorliegende Erfindung nicht darauf beschränkt, daß lediglich der Sternbecher 1 Ansätze 2 mit einer relativ großen radialen Länge aufweist, während der Sterndeckel 9 gemäß Figur 4 radial kürzere Ansätze 10 aufweist. Die Ansätze 2, 10 können auch durchaus unterschiedliche Länge haben, d.h. Ansätze 2 relativ großer radialer Länge können auch Ansätze 10 gleicher radialer Länge gegenüberliegen und diese Ansätze können versetzt zueinander angeordnet werden, so daß die Ansätze sowohl von oben als auch von unten her den Füllkörper 5, 7 seitlich übergreifen und randseitig bündig mit diesem verbunden sind.

### Zeichnungslegende

- 1: Sternbecher
- 2: Ansatz
- 3: Abschnitt
- 4: Abschnitt
- 5: Füllkörper-Oberteil
- 6: Trennungslinie
- 7: Füllkörper-Unterteil
- 8: Kante
- 9: Sterndeckel
- 10: Ansatz
- 11: Kante
- 12: Einlegeteil
- 13: Rand 13a
- 14: Ausnehmung
- 15: Noppe
- 16: Ausnehmung
- 17: Randausnehmung
- 18: Ansatz
- 19: Ausnehmung
- 20: Ausnehmung
- 21: Position
- 22: Position

## Patentansprüche

1. Scheibenförmiger Kunststoffkörper mit Einlegeteil, im wesentlichen bestehend aus mindestens einem zusammengesetzten das Einlegeteil zwischen sich aufnehmenden Füllkörper,
**dadurch gekennzeichnet,**
**daß** der Füllkörper (5,7) von zwei deckelartigen Folien eingefaßt ist, wobei die eine Folie in der Art eines Bechers (1) den Füllkörper (5,7) von der einen Seite umgibt, und die andere, gegenüberliegende Folie in der Art eines Deckels (9) auf die gegenüberliegende Seite des Füllkörpers aufgebracht ist.

2. Scheibenförmiger Kunststoffkörper nach Anspruch 1, **dadurch gekennzeichnet, daß** die deckelartigen Folien in der Art oder Form eines Bechers in einem externen Prozess oder beim Einlegen in das Formnest des Spritzgußwerkzeugs mechanisch oder pneumatisch ausgeformt werden.

3. Scheibenförmiger Kunststoffkörper nach Anspruch 1 oder 2, **dadurch gekennzeichnet, daß** Becher (1) und/oder Deckel (9) vorzugsweise jeweils sternartig radial am Außenumfang angeordnete Ansätze (2) aufweisen.

4. Scheibenförmiger Kunststoffkörper nach einem der Ansprüche 1 bis 3, **dadurch gekennzeichnet, daß** die Ansätze (2) aus einem ersten Abschnitt (3) und aus einem weiteren radial weiter außenliegenden Abschnitt (4) gebildet sind.

5. Scheibenförmiger Kunststoffkörper nach einem der Ansprüche 1 bis 4, **dadurch gekennzeichnet, daß** Becher (1) und Deckel (9) im Kunststoffspritzguß-Verfahren unmittelbar an den Füllkörper (5,7) angeformt sind, wobei die am Becher/Deckel angeformten, seitlichen Ansätze (2) im Spritzgußverfahren um den außenliegenden Rand des Füllkörpers (5,7) herum geführt und verspritzt werden und randseitige Markierungen bilden.

6. Scheibenförmiger Kunststoffkörper nach einem der Ansprüche 1 bis 5, **dadurch gekennzeichnet, daß** die deckelseitige Folien (1,9) spritzgußfähige, graphisch gestaltbare Folien sind, wobei die graphische Gestaltung inneliegend ausgeführt ist..

7. Scheibenförmiger Kunststoffkörper nach einem der Ansprüche 1 bis 6, **dadurch gekennzeichnet, daß** der Füllkörper aus einem Füllkörper-Oberteil (5) und einem zugeordneten Füllkörper-Unterteil (7) besteht, wobei die beiden Teile (5,7) miteinander formschlüssig verbunden und/oder verzahnt sind.

8. Scheibenförmiger Kunststoffkörper nach einem der Ansprüche 1 bis 7, **dadurch gekennzeichnet, daß** das Füllkörper-Oberteil (5) und das Füllkörper-Unterteil (7) im wesentlichen aus einem kreisringförmigen Körper besteht, die jeweils einander zugewandte mittlere Ausnehmungen (14,20) definieren.

9. Scheibenförmiger Kunststoffkörper nach einem der Ansprüche 1 bis 8, **dadurch gekennzeichnet, daß** in die Ausnehmungen (14,20) ein Einlegeteil (12) einlegbar ist.

10. Scheibenförmiger Kunststoffkörper nach einem der Ansprüche 1 bis 9, **dadurch gekennzeichnet, daß** das Einlegeteil (12) ein Transponder ist.

11. Scheibenförmiger Kunststoffkörper nach einem der Ansprüche 1 bis 10, **dadurch gekennzeichnet, daß** auf der Deckfläche des Füllkörper-Unterteils (7) axial nach oben gerichtete Noppen (15) vorzugsweise regelmäßig am Umfang verteilt angeordnet sind, die in zugeordnete Ausnehmungen (16) an der Innenseite des Füllkörper-Oberteils (5) eingreifen und mit diesen verrastbar sind.

12. Scheibenförmiger Kunststoffkörper nach einem der Ansprüche 1 bis 11, **dadurch gekennzeichnet, daß** die beiden Füllkörperteile (5,7) jeweils umlaufende Randsegmente (13, 13a) ausbilden, und zwischen zwei benachbarten Randsegmenten (13a, 13) entsprechende, sich nach aussen öffnende Randausnehmungen (17) vorhanden sind.

13. Scheibenförmiger Kunststoffkörper nach einem der Ansprüche 1 bis 12, **dadurch gekennzeichnet, daß** in die Randausnehmungen (17) zugeordnete radiale Ansätze (10, 2) der Deckfolien (1, 9) eingreifen.

14. Scheibenförmiger Kunststoffkörper nach einem der Ansprüche 1 bis 13, **dadurch gekennzeichnet, daß** das Füllkörper-Oberteil (5) mindestens einen axial nach unten gerichteten, randseitigen Ansatz (18) aufweist, der in eine zugeordnete, randseitig ausgebildete und nach außen hin geöffnete Ausnehmung (19) des Füllkörper-Unterteils (7) eingreift, so daß die beiden Füllkörperteile (5, 7) formschlüssig ineinander greifen und sich ergänzen.

15. Scheibenförmiger Kunststoffkörper nach einem der Ansprüche 1 bis 14, **dadurch gekennzeichnet, daß** der Füllkörper (5,7) aus einem mit Zink oder anderen Metallen dotierten Kunststoffmaterial besteht.

16. Scheibenförmiger Kunststoffkörper nach einem der Ansprüche 1 bis 15, **dadurch gekennzeichnet, daß** der Füllkörper (5,7) Füllmaterialien wie Ton, Glas, flüssige Füllstoffe, Kreide, pulverförmige Füllstoffe enthält.

17. Scheibenförmiger Kunststoffkörper nach einem der Ansprüche 1 bis 16, **dadurch gekennzeichnet, daß** der Füllkörper (5,7) im Kunststoff-Spritzgußverfahren hergestellt ist.

## Claims

1. Disk-shaped plastic article having an insert part, consisting substantially of at least one assembled filler body accommodating the insert part therebetween,
**characterised in that** the filler body (5, 7) is enclosed by two cover-like films, wherein one film surrounds the filler body (5, 7) from one side in the manner of a cup (1) and the other opposite film is applied in the manner of a cover (9) on the opposite side of the filler body.

2. Disk-shaped plastic article according to Claim 1, **characterised in that** the cover-like films are shaped mechanically or pneumatically in the manner or shape of a cup in an external process or during insertion into the cavity of the injection mould.

3. Disk-shaped plastic article according to Claim 1 or 2, **characterised in that** the cups (1) and/or covers (9) each preferably possess star-like lugs (2) arranged radially on the outer circumference.

4. Disk-shaped plastic article according to one of Claims 1 to 3, **characterised in that** the lugs (2) are formed from a first section (3) and from another section (4) located radially further out.

5. Disk-shaped plastic article according to one of Claims 1 to 4, **characterised in that** the cups (1) and covers (9) are moulded onto the filler body (5, 7) directly in the plastic injection moulding process, wherein the lateral lugs (2) moulded onto the cup/cover are led in the injection moulding process around the outer edge of the filler body (5, 7) and extruded and form peripheral markings.

6. Disk-shaped plastic article according to one of Claims 1 to 5, **characterised in that** the covering films (1, 9) are injection-mouldable, graphically designable films, wherein the graphic design is executed internally.

7. Disk-shaped plastic article according to one of Claims 1 to 6, **characterised in that** the filler body is composed of a filler body upper part (5) and an associated filler body lower part (7), wherein the two parts (5, 7) are connected to one another in form-locking manner and/or are interlocked.

8. Disk-shaped plastic article according to one of Claims 1 to 7, **characterised in that** the filler body upper part (5) and the filler body lower part (7) consist substantially of a circular body which each define central recesses (14, 20) facing towards one another.

9. Disk-shaped plastic article according to one of Claims 1 to 8, **characterised in that** an insert part (12) is insertable into the recesses (14, 20).

10. Disk-shaped plastic article according to one of Claims 1 to 9, **characterised in that** the insert part (12) is a transponder.

11. Disk-shaped plastic article according to one of Claims 1 to 10, **characterised in that** arranged on the covering surface of the filler body lower part (7) are axially upwardly pointing knobs (15), preferably distributed regularly at the circumference, which engage in associated recesses (16) on the inside of the filler body upper part (5) and are lockable with the latter.

12. Disk-shaped plastic article according to one of Claims 1 to 11, **characterised in that** the two filler body parts (5, 7) each form circulating peripheral segments (13, 13a) and between two neighbouring peripheral segments (13a, 13) there are corresponding peripheral recesses (17) opening towards the outside.

13. Disk-shaped plastic article according to one of Claims 1 to 12, **characterised in that** associated radial lugs (10, 2) of the covering films (1, 9) engage in the peripheral recesses (17).

14. Disk-shaped plastic article according to one of Claims 1 to 13, **characterised in that** the filler body upper part (5) possesses at least one axially downwardly pointing peripheral lug (18) which engages in an associated peripherally constructed and outwardly opening recess (19) in the filler body lower part (7) so that the two filler body parts (5, 7) engage in one another in form-locking manner and complement one another.

15. Disk-shaped plastic article according to one of Claims 1 to 14, **characterised in that** the filler body (5, 7) is composed of a plastic material doped with zinc or other metals.

16. Disk-shaped plastic article according to one of Claims 1 to 15, **characterised in that** the filler body (5, 7) contains filling materials such as clay, glass, liquid fillers, chalk or powdered fillers.

17. Disk-shaped plastic article according to one of Claims 1 to 16, **characterised in that** the filler body (5, 7) is manufactured by the plastic injection moulding process.

## Revendications

1. Corps en matière plastique discoïde avec une pièce encastrée, composé essentiellement d'au moins un corps de remplissage assemblé qui reçoit la pièce encastrée,
**caractérisé en ce que** le corps de remplissage (5, 7) est entouré de deux films formant couvercles, le premier film entourant le corps de remplissage (5, 7) à la manière d'un boîtier (1), d'un côté, tandis que le second film, opposé, est appliqué sur le côté opposé du corps de remplissage à la manière d'un couvercle (9).

2. Corps en matière plastique discoïde selon la revendication 1, **caractérisé en ce qu'**on donne aux films formant couvercles une forme de boîtier ou du type boîtier lors d'un processus externe ou en les plaçant dans l'empreinte du moule à injection, par voie mécanique ou pneumatique.

3. Corps en matière plastique discoïde selon la revendication 1 ou 2, **caractérisé en ce que** le boîtier (1) et/ou le couvercle (9) présentent des saillies (2) disposées de préférence en étoile, radialement, sur la circonférence extérieure.

4. Corps en matière plastique discoïde selon l'une des revendications 1 à 3, **caractérisé en ce que** les saillies (2) sont formées d'une première section (3) et d'une seconde section (4) située radialement plus à l'extérieur.

5. Corps en matière plastique selon l'une des revendications 1 à 4, **caractérisé en ce que** le boîtier (1) et le couvercle (9) sont rapportés directement sur le corps de remplissage (5, 7) selon un procédé de moulage par injection de matière plastique, les saillies latérales (2) rapportées sur le boîtier/le couvercle étant placées et injectées autour du bord extérieur du corps de remplissage (5, 7) lors du moulage par injection, et formant des marquages situés du côté du bord.

6. Corps en matière plastique discoïde selon l'une des revendications 1 à 5, **caractérisé en ce que** les films prévus côté couvercle (1, 9) sont des films aptes à être moulés par injection et à recevoir une forme graphique, cette forme graphique étant réalisée côté intérieur.

7. Corps en matière plastique discoïde selon l'une des revendications 1 à 6, **caractérisé en ce que** le corps de remplissage se compose d'une partie supérieure (5) et d'une partie inférieure associée (7), ces deux parties (5, 7) étant reliées par complémentarité de forme et/ou emboîtées.

8. Corps en matière plastique discoïde selon l'une des revendications 1 à 7, **caractérisé en ce que** la partie supérieure (5) et la partie inférieure (7) du corps de remplissage se composent essentiellement de corps annulaires qui définissent des cavités centrales (14, 20) tournées l'une vers l'autre.

9. Corps en matière plastique discoïde selon l'une des revendications 1 à 8, **caractérisé en ce qu'**une pièce encastrée (12) est apte à être placée dans les cavités (14, 20).

10. Corps en matière plastique discoïde selon l'une des revendications 1 à 9, **caractérisé en ce que** la pièce encastrée (12) est un transpondeur.

11. Corps en matière plastique discoïde selon l'une des revendications 1 à 10, **caractérisé en ce qu'**il est prévu, sur la surface de recouvrement de la partie inférieure de corps de remplissage (7), des bosses (15) dirigées axialement vers le haut et réparties de préférence régulièrement sur la circonférence, qui pénètrent dans des cavités correspondantes (16) prévues sur le côté intérieur de la partie supérieure de corps de remplissage (5) et qui sont aptes à s'encliqueter avec lesdites cavités (16).

12. Corps en matière plastique discoïde selon l'une des revendications 1 à 11, **caractérisé en ce que** les deux parties (5, 7) du corps de remplissage forment respectivement des segments de bord périphériques (13, 13a), et des creux de bord correspondants (17) qui s'ouvrent vers l'extérieur sont prévus entre deux segments de bord (13a, 13) voisins.

13. Corps en matière plastique discoïde selon l'une des revendications 1 à 12, **caractérisé en ce que** des saillies radiales associées (10, 2) des films de recouvrement (1, 9) pénètrent dans les creux de bord (17).

14. Corps en matière plastique discoïde selon l'une des revendications 1 à 13, **caractérisé en ce que** la partie supérieure (5) du corps de remplissage comporte au moins une saillie (18), côté bord, qui est dirigée axialement vers le bas et qui pénètre dans un creux associé (19) de la partie inférieure (7) formé du côté du bord et ouvert vers l'extérieur, de sorte que les deux parties (5, 7) du corps de remplissage pénètrent par complémentarité de forme l'une dans l'autre et se complètent.

15. Corps en matière plastique discoïde selon l'une des revendications 1 à 14, **caractérisé en ce que** le corps de remplissage (5, 7) se compose d'une matière plastique dopée avec du zinc ou d'autres métaux.

16. Corps en matière plastique discoïde selon l'une des revendications 1 à 15, **caractérisé en ce que** le corps de remplissage (5, 7) contient des matières de remplissage comme de l'argile, du verre, des matières de remplissage liquides, de la craie, des matières de remplissage pulvérulentes.

17. Corps en matière plastique discoïde selon l'une des revendications 1 à 16, **caractérisé en ce que** le corps de remplissage (5, 7) est fabriqué par moulage par injection de matière plastique.
